# EUROPÄISCHE PATENTANMELDUNG

(11) **EP 2 236 903 A1**
(43) Veröffentlichungstag der Anmeldung: **06.10.2010**
(21) Anmeldenummer: 10002890.1
(22) Anmeldetag: 18.03.2010
(51) Int. Cl.: F17C 1/16, B29C 49/20, B29C 49/04

(54) **Druckbehälter-Rohling sowie Verfahren und Blasformstation zu seiner Herstellung**

(30) Priorität: 02.04.2009 DE 102009015964
(71) Anmelder: Kunststoffverarbeitung Koetke GmbH, 29394 Reinsdorf (DE)
(72) Erfinder: Koetke, Claus-Dieter, 29389 Bad Bodenteich (DE)
(74) Vertreter: Prietsch, Reiner

(57) **Zusammenfassung**

Ein Druckbehälter-Rohling aus einem thermoplastischen Kunststoff, mit einem Körper (1), der über eine Schulter (3) in einen Hals (4) und eine Mündung (5) übergeht, die zum Einschrauben eines Ventils ausgebildet ist, ist für unter hohem Druck stehende Gase verwendbar, wenn der Rohling innenseitig einen von dem Kunststoff umhüllten Metalleinsatz (6) zur Verstärkung mindestens der Schulter (3) des Rohlings hat.

Dieser Druckbehälter-Rohling läßt sich in einem Extrusionsblasformverfahren herstellen. Hierzu wird bei offener Blasform ein Metalleinsatz mit der Innenkontur zumindest der Schulter des Rohlings in den entsprechenden Bereich der Kavität der Blasform eingebracht und der Schlauch, diesen Metalleinsatz umgebend, in Blasform extrudiert, bevor diese geschlossen wird.

## Beschreibung

Die Erfindung betrifft einen Druckbehälter-Rohling aus einem thermoplastischen Kunststoff, mit einem Körper, der über eine Schulter in einen Hals und eine Mündung übergeht, die zum Einschrauben eines Ventils ausgebildet ist.

Die Erfindung erstreckt sich auch auf einen verwendungsfertigen Druckbehälter, der im Wesentlichen aus dem vorgenannten Rohling mit einer zusätzlichen äußeren Armierung und eingeschraubtem Ventil besteht. Die äußere Armierung kann, wie ansich bekannt, insbesondere aus einer Bewicklung aus kunstharzgetränkten Fasern hoher Zugfestigkeit bestehen.

Die Erfindung umfasst desweiteren ein Verfahren und eine Blasformstation zum Herstellen eines Druckbehälter-Rohlings der vorgenannten Gattung.

Druckbehälter auf der Basis eines Rohlings aus thermoplastischem Kunststoff werden zur Bevorratung und Abgabe von Fluiden wie Propan oder Butan verwendet. Bei normalen Umgebungstemperaturen stellt sich der übliche Gleichgewichtszustand zwischen der überwiegenden Flüssigphase und der Gasphase des betreffenden Fluids ein. Solche preiswerten Druckbehälter, in der Regel flaschenförmig oder kartuschenförmig und mit Kreisquerschnitt, haben sich für kleine Volumina bis zu einigen hundert Millilitern bewährt. Gegen die Verwendung auch für größere Volumina und/oder für Gase wie etwa Wasserstoff, die bei Umgebungstemperatur einen erheblichen Innendruck in dem Druckbehälter erzeugen, bestehen bisher Bedenken, denn ein derartiger Druckbehälter aus einem armierten Kunststoffrohling weist zwar eine hohe statische Berstfestigkeit auf, ist aber bei bestimmten dynamischen Belastungen, wie sie z.B. beim Falltest auftreten, bruchgefährdet. Ein weiterer Schwachpunkt ist die Abdichtung zwischen dem Hals bzw. der Mündung des Behälters und dem eingeschraubten Ventil, denn weder eine Erhöhung der Behälterwandstärke noch die genannte Armierung können das Problem lösen, die Verbindung zwischen dem Behälter und dem eingeschraubten Ventil zuverlässig ausreißfest und dicht zu machen.

Der Erfindung liegt die Aufgabe zugrunde, einen Druckbehälter-Rohling der einleitend angegebenen Gattung zu schaffen, der nach Armierung und Einschrauben eines Ventils einen handhabungssicheren Druckbehälter darstellt, der für große Volumina an Flüssiggas und/oder unter hohem Druck stehende Gase wie insbesondere Wasserstoff verwendbar ist.

Diese Aufgabe ist erfindungsgemäß dadurch gelöst, dass der Rohling innenseitig einen von dem Kunststoff umhüllten Metalleinsatz zur Verstärkung mindestens der Schulter des Rohlings hat.

Diese Lösung beruht auf der diesseitigen Erkenntnis, dass der am meisten gefährdete Bereich eines wie üblich außenseitig armierten, thermoplastischen Kunststoffdruckbehälters dessen als Schulter bezeichneter Übergang von dem Behälterkörper in den Behälterhals ist. Dieser Bereich, der bei üblichen Bersttests gewöhnlich als erstes versagt, könnte zwar durch eine spezielle weitere Armierung außenseitig verstärkt werden; dies hat sich aber als äußerst unwirtschaftlich herausgestellt. Die innenseitige Verstärkung mittels eines Metalleinsatzes ist demgegenüber wesentlich günstiger, weil sie in das Blasformverfahren des Behälterrohlings integriert werden kann.

Vorzugsweise hat der Metalleinsatz Öffnungen, die von dem Kunststoff ausgefüllt sind. Hierdurch wird eine gleichbleibend genaue Zentrierung des Metalleinsatzes relativ zu dem Behälterquerschnitt in diesem Bereich erzielt.

Eine Weiterbildung, die einen sicheren Sitz des Metalleinsatzes auch bei starken, auf den Behälter einwirkenden Stößen und anderen mechanischen Erschütterungen gewährleistet, besteht darin, dass der Querschnitt der Öffnungen des Metalleinsatzes sich von außen zum Innenraum des Rohlings erweitert. Die Öffnungen bilden also von dem Kunststoff durchgriffene Hinterschnitte.

Bei einer besonders bevorzugten Ausführungsform reicht der Metalleinsatz bis zur Mündung am Ende des Halses des Rohlings. Infolgedessen ist auch der Halsbereich des Rohlings gegen von außen auf den Hals einwirkende Biege- und Schärkräfte besonders widerstandsfähig.

Eine weitere Verbesserung der Fixierung des Metalleinsatzes an der Innenkontur des Rohlings läßt sich dadurch erzielen, dass der Metalleinsatz zumindest im Bereich des Halses eine profilierte Oberfläche hat.

Das Problem eine dichte Verbindung zwischen dem Behälter und dem Ventil zu gewährleisten, das sich naturgemäß besonders bei unter hohem Innendruck stehenden Behältern stellt, entfällt, wenn der Metalleinsatz im Mündungsbereich ein Innengewinde zum Einschrauben des Ventils hat, denn ein Metallinnengewinde ist wesentlich formbeständiger und langzeitstabiler als ein Innengewinde in einem thermoplastischen Kunststoff.

Eine weitere Verbesserung der Berstfestigkeit wird erzielt, wenn der Rohling an seinem dem Hals gegenüberliegenden Bodenbereich eine von dem Kunststoff umhüllte Metallkalotte hat. Diese Metallkalotte ist also gewissermaßen das Gegenstück des hals- bzw. mündungsseitigen Metalleinsatzes. Zur besseren Fixierung kann folglich die Metallkalotte Öffnungen haben, die wie diejenigen des Metalleinsatzes von dem Kunststoff ausgefüllt und gegebenenfalls auch hinterschnitten sind.

Im Weiteren kann die Metallkalotte mittig einen Gewindenippel mit einem Innengewinde haben. Diese Ausführungsform eignet sich insbesondere für Druckbehälter, die nicht über das halsseitige Ventil sondern über eine Bodenöffnung befüllt werden, die anschließend mit einem Gewindestopfen verschlossen wird.

Zum Herstellen eines Druckbehälter-Rohlings aus Kunststoff ist ein Verfahren bekannt, das die folgenden Schritte umfasst:
- Extrudieren eines Schlauches aus einem thermoplastischen Kunststoff aus einer Extrusionsdüse in eine offene Blasform, deren Kavität das Negativ des Rohlings ist,
- Schliessen der Blasform und Einleiten von Druckluft zum Ausformen des Rohlings,
- Öffnen der Blasform nach einer Kühlzeit und Entnehmen des Rohlings.

Nach diesem Verfahren können Druckbehälter-Rohlinge der eingangs angegebenen Art preiswert aber mit erheblich verbesserter Festigkeit hergestellt werden, wenn erfindungsgemäß bei offener Blasform ein Metalleinsatz mit der Innenkontur zumindest der Schulter des Rohlings in den entsprechenden Bereich der Kavität eingebracht wird und der Schlauch, diesen Metalleinsatz umgebend, in die offene Blasform extrudiert wird.

Eine Weiterbildung dieses Verfahrens, bei der der Rohling mit nach unten weisender Mündung ausgeformt wird, zeichnet sich dadurch aus, dass der Metalleinsatz mittels eines heb- und senkbaren Dorns von unten in die offene Blasform eingebracht wird.

Eine weitere Verbesserung der Festigkeit des Rohlings und damit auch des späteren Druckbehälters wird in einer Ausführungsform des Verfahrens erreicht, bei der bei offener Blasform eine Metallkalotte mit der Innenkontur zumindest des Bodens des Rohlings in den entsprechenden Bereich der Kavität eingebracht wird und der Schlauch, die Metallkalotte umgebend, in die offene Blasform extrudiert wird.

Besonders rationell ist das Verfahren, wenn die Metallkalotte für den Boden des Rohlings zusammen mit dem Metalleinsatz für dessen Halsbereich mittels des gleichen Dorns von unten in die offene Blasform eingebracht wird.

Wenn die Blasform zum Ausformen des Rohlings in eine gesonderte Blasstation verbracht werden soll um die Taktzeit zu verkürzen, ist eine Variante des Verfahrens zweckmäßig, bei der der in die offene Blasform extrudierte Schlauch im Bereich seines Eintritts in die Blasform mittels Unterdruck offengehalten und oberhalb dessen durchtrennt wird, anschließend die Blasform aus ihrer Position unter der Extrusionsdüse in die gesonderte Blasstation verfahren wird und eine Metallkalotte mit der Innenkontur zumindest des Bodens des Rohlings in den dem Boden entsprechenden Bereich der Kavität mittels eines heb- und senkbaren Dorns von oben in die offene Blasform eingebracht wird. Dies erübrigt die Bestückung des den Metalleinsatz tragenden Dorns zusätzlich mit der Metallkalotte, ermöglicht die Verwendung eines entsprechend kürzeren Dorns und läßt gleichzeitig die Wahl, den unteren oder den oberen Dorn als Blasdorn zum Ausformen des Rohlings auszubilden.

Eine Blasformstation zum Herstellen eines derartigen Druckbehälter-Rohlings nach dem vorstehenden Verfahren umfasst ein längsgeteiltes Blasformwerkzeug, das wenigstens zwei zum Öffnen und Schliessen des Blasformwerkzeugs relativ zueinander verfahrbare Formteile umfasst, die zusammen eine Kavität begrenzen, die das Negativ des Rohlings mit vertikaler Mittelachse und nach unten weisender Mündung ist, hat desweiteren einen heb- und senkbaren Blasdorn zum Ausformen des Rohlings aus einem thermoplastischen, extrudierten Kunststoffschlauch und zeichnet sich erfindungsgemäß dadurch aus, dass der Blasdorn unter dem Blasformwerkzeug angeordnet und als Halter für den Metalleinsatz ausgebildet ist, der die Innenkontur zumindest der Schulter des Rohlings hat.

Vorzugsweise hat der Blasdorn radial bewegliche Klemmorgane um den Metalleinsatz zu halten und nach dem Ausblasen des Rohlings frei zu geben.

Der Blasdorn kann desweiteren eine bis zum Boden des Rohlings reichende Verlängerung haben, die als Halter für eine den Boden des Rohlings verstärkende Metallkalotte ausgebildet ist.

Eine Ausführungsform der Blasformstation, die zum Herstellen eines Druckbehälter-Rohlings geeignet ist, der sowohl im Hals- als auch im Bodenbereich verstärkt sein kann, zeichnet sich dadurch aus, dass das Blasformwerkzeug auf der Eintrittsseite des Kunststoffschlauches relativ zu den verfahrbaren Formteilen bewegliche, zusammenfahrbare Formoberteile mit einer Innenkontur zur Ausbildung des Bodens des Rohlings und oberhalb dieser Formoberteile Schieber mit Saugöffnungen zum Offenhalten des abgetrennten oberen Endes des Kunststoffschlauches hat, und dass über dem Blasformwerkzeug ein heb- und senkbarer Dorn angeordnet ist, der als Halter für einen Metalleinsatz entsprechend der Innenkontur zumindest des Schulterbereichs und/oder für eine Metallkalotte mit der Innenkontur zumindest des Bodens des Rohlings ausgebildet ist.

Dabei kann der Dorn über dem Blasformwerkzeug als Blasdorn ausgebildet sein, in welchem Fall anstelle des unter dem Blasformwerkzeug angeordneten Blasdorns ein einfacher Dorn als Halter für den Metalleinsatz angeordnet ist.

Für derartige Druckbehälter-Rohlinge geeignete thermoplastische Kunststoffe, die insbesondere auch als Schlauch mit mehreren Schichten unterschiedlicher Funktion extrudiert werden können, sind dem Fachmann bekannt.

Die Erfindung wird nachfolgend anhand der Zeichnung erläutert, die in schematischer Vereinfachung Ausführungsbeispiele eines Druckbehälter-Rohlings und Teile der Blasformstation zu seiner Herstellung zeigt, und zwar:
- Fig. 1:: eine erste Ausführungsform des Druckbehälter-Rohlings im Längsschnitt,
- Fig. 2:: einen thermoplastischen Schlauchabschnitt in einer geöffneten Blasform, zur Erzeugung des Rohlings,
- Fig. 3a) bis c):: die Schritte zur Ausformung des Hals- und Mündungsbereiches des Druckbehälter-Rohlings gemäß Fig. 1 in der Blasform,
- Fig. 4:: den fertig ausgeformten Druckbehälter-Rohling vor dem Auswerfen aus der Blasform,
- Fig. 5:: eine zweite Ausführungsform des Druckbehälter-Rohlings mit einer Öffnung auch im Boden im Längsschnitt und zur Erläuterung mit gestrichelt dargestelltem Blasdorn entsprechend einem ersten Herstellverfahren,
- Fig. 5a):: den Bodenbereich einer gegenüber Fig. 5 vereinfachten Ausführungsform,
- Fig. 6a): bis e):
aufeinanderfolgende Stufen zur Herstellung des Druckbehälter-Rohlings in Fig. 5, jedoch nach einem alternativen Verfahren.

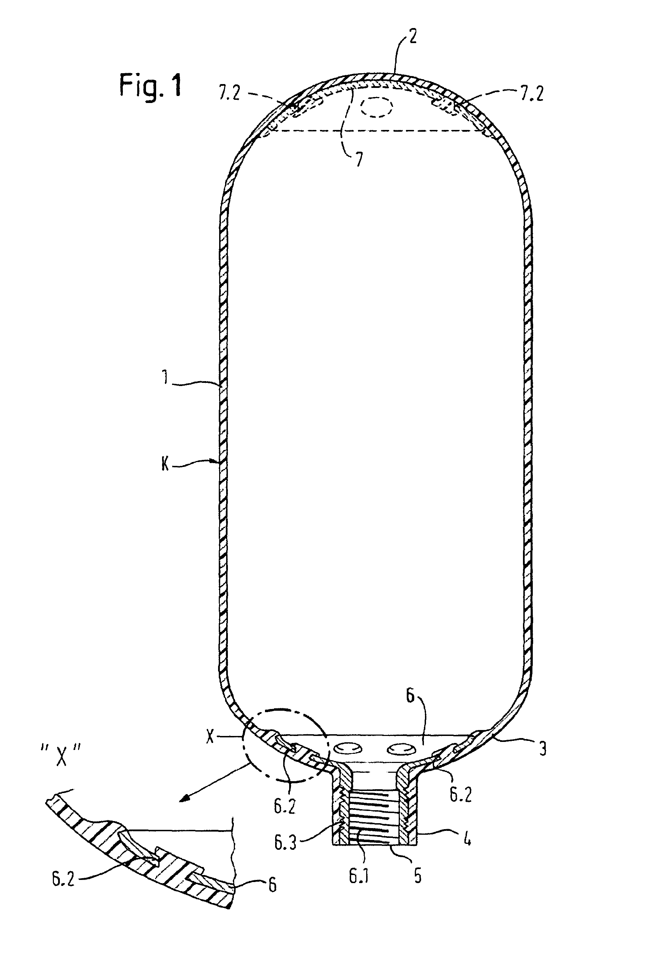

Der in Fig. 1 im Längsschnitt dargestellte Druckbehälter-Rohling besteht aus einem im später erläuterten Blasformverfahren erzeugten, näherungsweise flaschenförmigen Kunststoffhohlkörper aus einem gegebenenfalls mehrlagigen thermoplastischen Kunststoff K. Der Rohling hat einen Körper 1 mit Kreisquerschnitt, einen kugelkalottenförmigen Boden 2 und eine Schulter 3, die in einen Hals 4 mit einer Mündung 5 übergeht.

Der Rohling hat im Bereich seiner Schulter 3 innenseitig einen von dem Kunststoff K umhüllten Metalleinsatz 6, der sich bis zu der Mündung 5 des Rohlings erstreckt. Der Metalleinsatz 6 hat ein Innengewinde 6.1 zum Einschrauben eines nicht dargestellten Verschlussorgans, insbesondere eines Ventils. Der Metalleinsatz 6 kann sich, abweichend von der Darstellung in Fig. 1, bis an den Übergang der Schulter 3 in den Körper 1 erstrecken.

Um eine zuverlässige kraftschlüssige Verbindung zwischen dem Metalleinsatz 6 und dem Kunststoff K herzustellen, hat der Metalleinsatz 6 mindestens im Bereich der Schulter 3 Öffnungen 6.2, die entsprechend der Einzelheit "X" zusätzlich derart hinterschnitten sein können, dass sie sich vom Außen- zum Innenraum des Rohlings erweitern. Während des Blasformens des Rohlings tritt ein Teil des Kunststoffes K in dem entsprechenden Bereich durch die Öffnungen 6.2 hindurch, so dass sich nach dem Erkalten des Kunststoffes K an diesen Stellen eine nietähnliche Verbindung ergibt. Ebenfalls zur innigen Verbindung des Metalleinsatzes mit dem Kunststoff K im Bereich des Halses 4 hat der Metalleinsatz 6 außenseitig mindestens bereichsweise eine gezahnte Oberfläche 6.3.

In Abhängigkeit von dem Innendruck, dem der Druckbehälter-Rohling später, nach dem Befüllen, ausgesetzt ist, kann es empfehlenswert sein, den im Prinzip weniger bruch- bzw. berstgefährdeten Boden 2, wie gestrichelt dargestellt, in analoger Weise mit einer Metallkalotte 7 zu verstärken. Die Metallkalotte 7 hat zur innigen Verbindung mit dem Kunststoff K den Öffnungen 6.2 des Metalleinsatzes 6 entsprechende Öffnungen 7.2 für den Durchtritt einer entsprechenden, kleinen Menge des Kunststoffes K.

Der endgültige Druckbehälter unterscheidet sich von dem in Fig. 1 dargestellten, mindestens im Schulter- und Halsbereich verstärkten Rohling nur durch eine zusätzliche äußere Armierung, z.B. aus kunstharzgetränktem Glasfasergewebe sowie ein in die Mündung 5 druckdicht eingeschraubtes Ventil oder Verschlussorgan (nicht dargestellt).

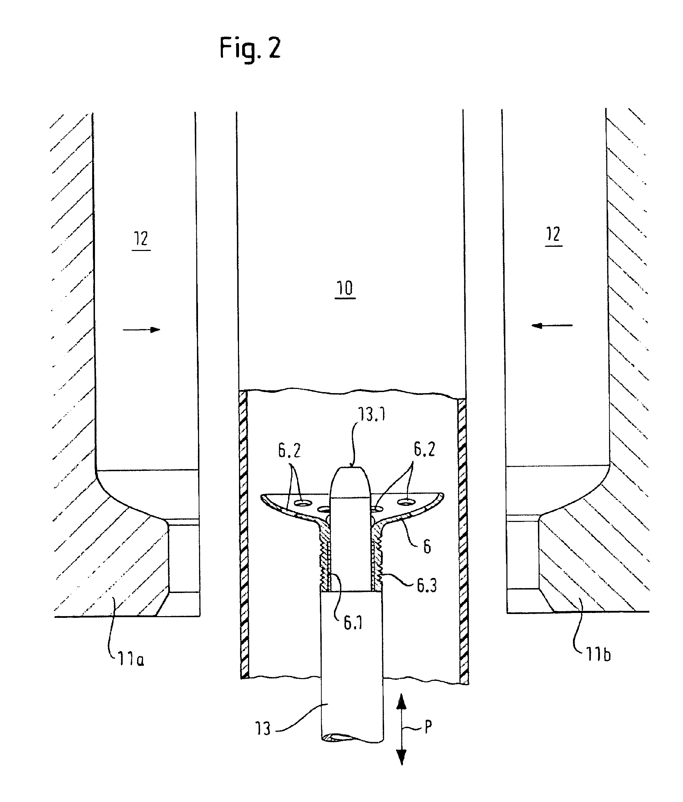

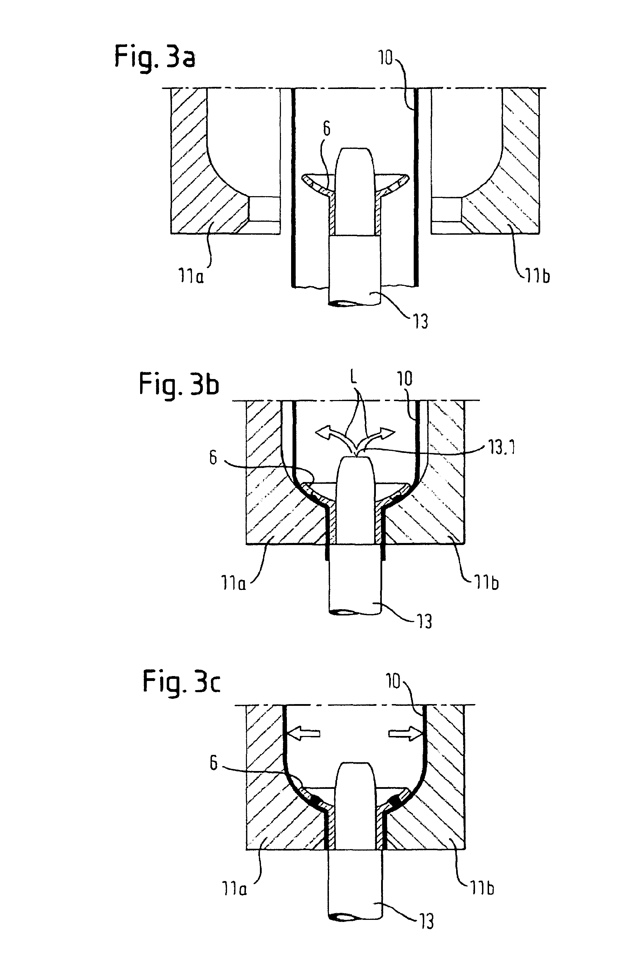

Ein Rohling wie in Fig. 1, jedoch ohne die optionale Metallkalotte 7, lässt sich am besten in einem grundsätzlich bekannten Blasformprozess aus einem extrudierten, thermoplastischen Kunststoffschlauch herstellen, wie schematisch anhand der Figuren 2, 3a) bis 3c) und 4 dargestellt.

Fig. 2 zeigt ganz schematisch die geöffneten Hälften 11a und 11b des unteren Teils einer an sich üblichen Blasform, deren Kavität 12 das Negativ des Druckbehälter-Rohlings ist. Zwischen die geöffneten Hälften 11a und 11b der Blasform ist von unten ein Blasdorn 13 eingefahren, der gleichzeitig als Träger für den Metalleinsatz 6 ausgebildet ist. Der Blasdorn 13 hat stirnseitig eine nach oben gerichtete Blasluftöffnung 13.1, ist heb- und senkbar entsprechend dem Doppelpfeil P und hat erforderlichenfalls nicht dargestellte, radialbewegliche Klemmorgane für den Metalleinsatz 6 alternativ oder zusätzlich zu der gezeichneten Durchmesserstufe, auf der der Metalleinsatz 6 mit seiner unteren, ringförmigen Stirnfläche aufsitzt. In der gezeichneten, angehobenen Stellung des Blasdorns 13 wird aus einer nicht dargestellten, oberhalb der Blasform angeordneten üblichen Extrusionsdüse ein Schlauch 10 bis über das untere Ende der Blasform hinaus extrudiert. Der Schlauch 10 kann einlagig sein oder mehrere, koextrudierte Schichten unterschiedlicher thermoplastischer Kunststoffe umfassen. Der Durchmesser des thermoplastischen Schlauches 10 ist in der Regel etwas kleiner als der Durchmesser des späteren Rohlings im Bereich seines Körpers 1.

In Fig. 3a) ist als Halbschnitt der den Halsbereich ausformende Teil der Blasformhälfte 11a in Offenstellung dargestellt.

In Fig. 3b) ist die Blasform geschlossen. Über den Blasdorn 13 wird Druckluft entsprechend dem Pfeil L in das Innere des Schlauches 10 eingeblasen. Dadurch legt sich der Schlauch 10 an die Wandung der Kavität der Blasform an. Gleichzeitig entsteht die innige Verbindung zwischen dem Metalleinsatz 6, dem entsprechenden Bereich der Schulter 3 und im Bereich des Halses 4 des Rohlings.

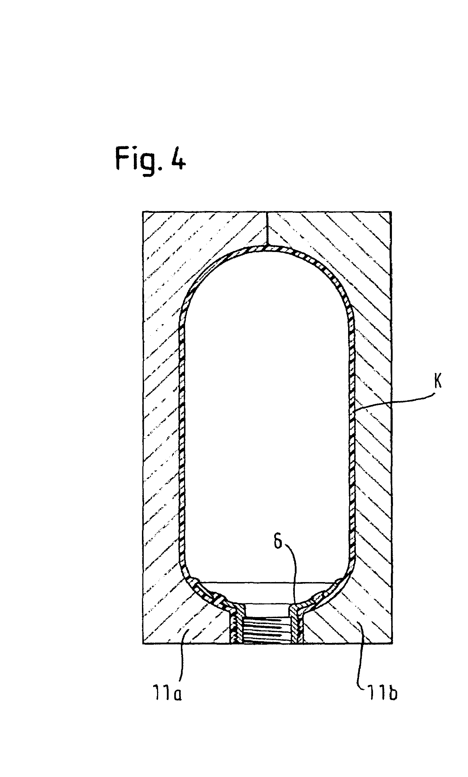

Fig. 4 zeigt den fertig geblasenen Rohling in der noch geschlossenen Blasform, aus der er nach der üblichen Kühlzeit durch Auseinanderfahren der Blasform 11a, 11b entformt wird. In dieser und in allen anderen schematischen Darstellungen sind die an sich bekannten Teile der Blasform und deren Hälften 11a, 11b weggelassen, also insbesondere die Antriebe, die Kühlkanäle sowie die Quetschkanten und die Kavitäten zur Aufnahme des verdrängten und abgequetschten Kunststoffmaterials. Diese Einzelheiten sind dem Fachmann bekannt.

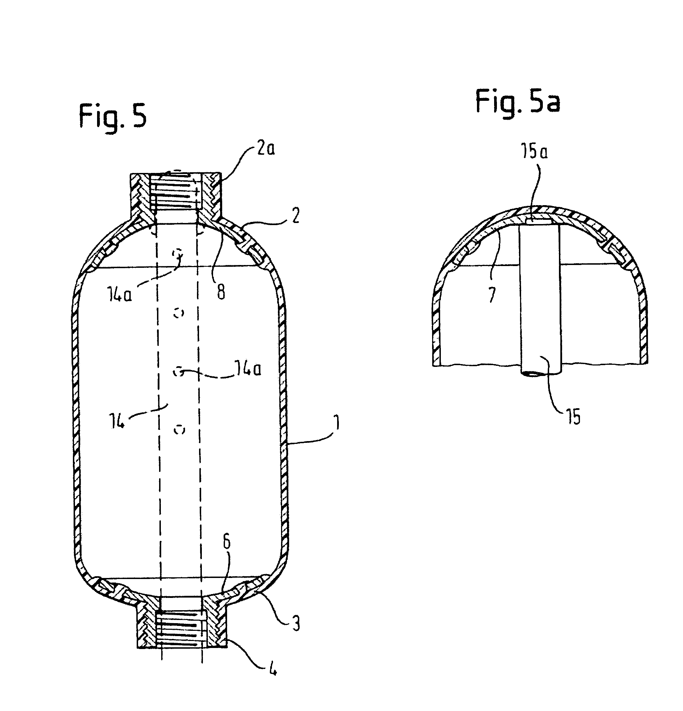

Die in Fig. 5 dargestellte Ausführungsform des Druckbehälter-Rohlings hat zusätzlich zu dem im Schulter- und Halsbereich des Rohlings angeordneten Metalleinsatz 6 eine letzterem im Wesentlichen entsprechende Verstärkung in Form einer Metallkalotte 8 im Bereich des Bodens 2. Der Boden 2 hat mittig einen zentralen Stutzen 2a, der einen mit der Metallkalotte 8 einstückigen Gewindenippel 8.1 umschliesst. Letzterer kann zwar einen von dem Durchmesser der Mündung 5 des Rohlings 1 abweichenden Innendurchmesser haben, hat aber im übrigen ein Innengewinde, eine außenseitig gezahnte Oberfläche im Bereich des Stutzens 2a und von dem Kunststoff durchsetzten Verankerungsöffnungen wie der Metalleinsatz 6. Zur Herstellung des Rohlings wird die Metallkalotte 8 mittels eines langen Blasdorns 14 von unten in die Blasform eingebracht. Der Blasdorn 14 ist wie der Blasdorn 13 in Fig. 2 heb- und senkbar. An seinem oberen Ende trägt er die Metallkalotte 8 entweder auf einer umlaufenden Durchmesserstufe oder auf radialen Klemmorganen, die auch aktiv ausfahrbar und einziehbar sein können. In seinem unteren Bereich hat der Blasdorn 14 entsprechende Haltemittel für den Metalleinsatz 6, z.B. passive oder aktive Klemmorgane oder eine Durchmesserstufe analog dem Blasdorn 13 in Fig. 2. Der Blasdorn 14 ist mit einer geeigneten Anzahl radialer Blasluftöffnungen 14a versehen. Der Blas- und Formgebungsprozess verläuft analog demjenigen der Fig. 3a) bis 3c).

In Fig. 5a ist der Bodenbereich einer gegenüber Fig. 5 vereinfachten Ausführungsform des Rohlings dargestellt und zwar wie in Fig. 1 gestrichelt gezeichnet, d.h. mit einer Metallkalotte 7, die keine zentrale Öffnung für einen Gewindenippel aufweist. Diese Metallkalotte wird mittels eines Blasdorns 15 eingebracht, der im Wesentlichen dem Blasdorn 14 in Fig. 5 entspricht, jedoch am Stirnende lediglich einen Zentrieransatz 15a hat, der mit einer Zentriervertiefung in der Metallkalotte 7 zusammenwirkt, damit diese sicher an der vorgegebenen Stelle gehalten wird, bis der Rohling fertig ausgeblasen ist. Andere Arten der sicheren aber durch Zurückziehen des Blasdorns 14 lösbaren Verbindung dessen mit der Metallkalotte sind genauso geeignet.

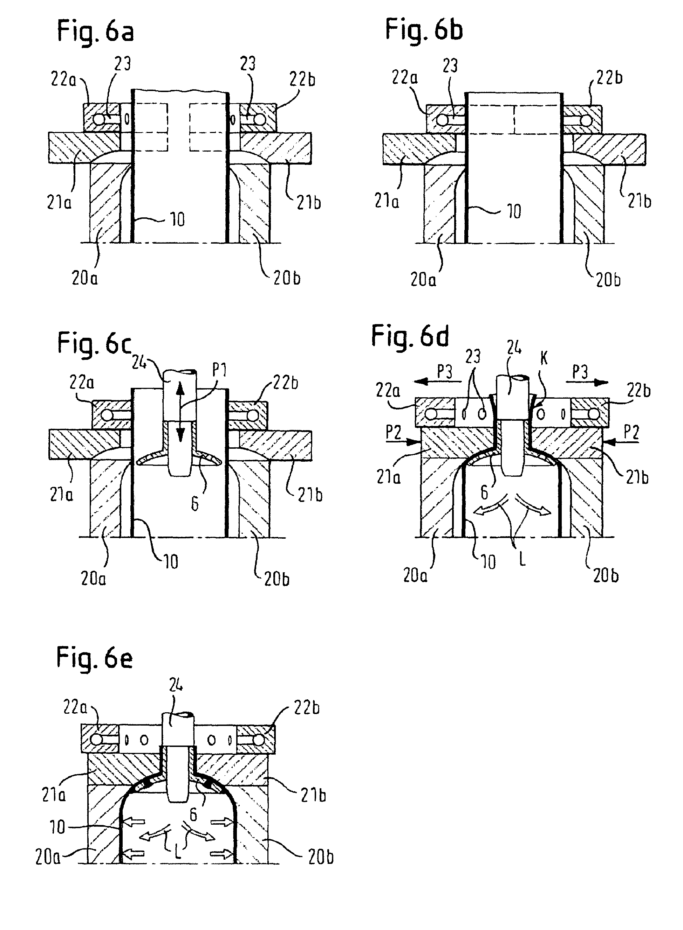

Ein alternatives Verfahren zur Herstellung des Druckbehälter-Rohlings wird durch die Figuren 6a) bis 6e) veranschaulicht. Während die Rohlinge entsprechend den Fig. 1 bis 5a) in einer ortsfest unter der nicht dargestellten Extrusionsdüse befindlichen, geteilten Blasform hergestellt werden, ermöglicht die durch die Fig. 6a) bis 6e) veranschaulichte Verfahrensweise eine demgegenüber kürzere Taktzeit, und zwar dadurch, dass die Blasform nach dem Einbringen des Schlauches aus ihrer Position unter der Extrusionsdüse in eine gesonderte Blasstation verfahren wird. In dieser Variante wird der Rohling anders als bei der Verfahrensweise gemäß den Fig. 2 bis 5 mit nach oben weisender Mündung erzeugt.

Das Blasformwerkzeug ist symmetrisch zur Formtrennebene aufgebaut. Gezeigt ist lediglich der obere Bereich im Halbschnitt. Auf der Eintrittsseite des Kunststoffschlauches 10 ist oberhalb der verfahrbaren Formhälfte 20a ein unabhängig, jedoch in gleicher Richtung verfahrbares Formoberteil 21a angeordnet. Über diesem befindet sich wiederum ein gleichsinnig, jedoch unabhängig verfahrbarer Schieber 22a mit Saugöffnungen 23.

In Fig. 6a) befindet sich dieses Blasformwerkzeug unter der nicht dargestellten Extrusionsdüse in Offenstellung der vorgenannten Teile. Aus der Extrusionsdüse wird in die geöffnete Form der Kunststoffschlauch 10 extrudiert.

Nach dem Extrudieren einer ausreichenden Länge des Schlauches fahren der Schieber 22a und sein nicht dargestelltes Gegenstück auf den Durchmesser des Schlauches zusammen, vgl. Fig. 6b). Gleichzeitig werden die Saugöffnungen 23 mit Unterdruck beaufschlagt. Dadurch wird der betreffende Bereich des Schlauches 10 gehalten und kann nun oberhalb der Schieber wie 22a in an sich bekannter Weise mit einem Messer oder einem Glühdraht abgetrennt werden.

In Fig. 6c) ist das Blasformwerkzeug in eine gesonderte Blasstation verfahren. Die Blasstation hat einen entsprechend dem Pfeil P1 heb- und senkbaren Dorn 24, an dessen unterem Ende mittels radialer Klemmorgane der Metalleinsatz 6 gehalten ist. Der Dorn 24 wird in die gezeichnete Stellung abgesenkt. Er ist hier gleichzeitig als Blasdorn ausgebildet.

Gemäß Fig. 6d) fährt nun das Formoberteil 21a entsprechend dem Pfeil P2 mit seinem nicht gezeichneten Gegenstück zusammen, um die Kavität des Blasformwerkzeuges zu schliessen und den Kunststoff K gegen den Halsbereich des Metalleinsatzes 6 zu drücken. Gleichzeitig kann der Schieber 22a nach Aufhebung des Unterdrucks an den Saugöffnungen entsprechend dem Pfeil P3 zurückfahren. Der Dorn 24 wird mit Stützluft beaufschlagt (Pfeil L).

Gemäß Fig. 6e) wird in der nun geschlossenen Kavität der Rohling fertig ausgeblasen, siehe Pfeile L.

Mit einem entsprechend verlängerten Dorn 24 und geeigneten Haltemitteln am Ende ist die gleiche Verfahrensweise auch zur Herstellung eines Rohlings mit einem verstärkten Boden und zusätzlichem Gewindenippel gemäß Fig. 5 oder nur mit einem verstärkten Boden entsprechend Fig. 5a möglich. Im ersteren Fall kann der Dorn 24 als reiner Haltedorn ausgebildet sein. Eine Metallkalotte entsprechend der Metallkalotte 8 in Fig. 5 kann von unten mit einem Blasdorn 13 wie in Fig. 2, der jedoch anstelle des Metalleinsatzes 6 die Metallkalotte 8 trägt, eingebracht werden.

Der Rohling kann auch analog Fig. 6a) bis 6e), jedoch in der Orientierung wie in Fig. 1, 2 hergestellt werden. Dann trägt der (obere) Dorn 24 nur die Metallkalotte wie 7 oder 8. Ein unterer Dorn, der ein Blasdorn wie 13 in Fig. 2 sein kann, positioniert den Metalleinsatz für den Schulter- und Halsbereich des Druckbehälter-Rohlings.

## Patentansprüche

1. Druckbehälter-Rohling aus einem thermoplastischen Kunststoff, mit einem Körper (1), der über eine Schulter (3) in einen Hals (4) und eine Mündung (5) übergeht, die zum Einschrauben eines Ventils ausgebildet ist, **dadurch gekennzeichnet, dass** der Rohling innenseitig einen von dem Kunststoff (K) umhüllten Metalleinsatz (6) zur Verstärkung mindestens der Schulter (3) des Rohlings hat.

2. Rohling nach Anspruch 1, **dadurch gekennzeichnet, dass** der Metalleinsatz (6) Öffnungen (6.2) hat, die von dem Kunststoff (K) ausgefüllt sind.

3. Rohling nach Anspruch 2, **dadurch gekennzeichnet, dass** der Querschnitt der Öffnungen (6.2) sich von außen zum Innenraum des Rohlings erweitert.

4. Rohling nach einem der Ansprüche 1 bis 3, **dadurch gekennzeichnet, dass** der Metalleinsatz (6) bis zur Mündung (5) am Ende des Halses (4) des Rohlings reicht.

5. Rohling nach einem der Ansprüche 1 bis 4, **dadurch gekennzeichnet, dass** der Metalleinsatz (6) zumindest im Bereich des Halses (4) des Rohlings eine profilierte Oberfläche (6.3) hat.

6. Rohling nach einem der Ansprüche 1 bis 5, **dadurch gekennzeichnet, dass** der Metalleinsatz (6) im Mündungsbereich ein Innengewinde (6.1) zum Einschrauben des Ventils hat.

7. Rohling nach einem der Ansprüche 1 bis 6, **dadurch gekennzeichnet, dass** der Rohling in seinem dem Hals gegenüberliegenden Bodenbereich (2) eine von dem Kunststoff (K) umhüllte Metallkalotte (7, 8) hat.

8. Rohling nach Anspruch 7, **dadurch gekennzeichnet, dass** die Metallkalotte (8) mittig einen Gewindenippel (8.1) mit einem Innengewinde hat.

9. Verfahren zum Herstellen eines Druckbehälter-Rohlings, dessen Körper über eine Schulter in einen Hals und eine Mündung übergeht, die zum Einschrauben eines Ventils ausgebildet ist, wobei das Verfahren folgende Schritte umfasst:
- Extrudieren eines Schlauches aus einem thermoplastischen Kunststoff (von oben) in eine offene Blasform, deren Kavität das Negativ des Rohlings ist,
- Schliessen der Blasform und Einleiten von Druckluft zum Ausformen des Rohlings,
- Öffnen der Blasform nach einer Kühlzeit und Entnehmen des Rohlings,
**dadurch gekennzeichnet, dass** bei offener Blasform ein Metalleinsatz mit der Innenkontur zumindest der Schulter des Rohlings in den entsprechenden Bereich der Kavität eingebracht wird und dass der Schlauch, diesen Metalleinsatz umgebend, in die offene Blasform extrudiert wird.

10. Verfahren nach Anspruch 9, wobei der Rohling mit nach unten weisender Mündung ausgeformt wird, **dadurch gekennzeichnet, dass** der Metalleinsatz mittels eines heb- und senkbaren Dorns von unten in die offene Blasform eingebracht wird.

11. Verfahren nach Anspruch 9 oder 10, **dadurch gekennzeichnet, dass** bei offener Blasform eine Metallkalotte mit der Innenkontur zumindest des Bodens des Rohlings in den entsprechenden Bereich der Kavität eingebracht wird und dass der Schlauch, diese Metallkalotte umgebend, in die offene Blasform extrudiert wird.

12. Verfahren nach Anspruch 11, **dadurch gekennzeichnet, dass** die Metallkalotte für den Boden des Rohlings zusammen mit dem Metalleinsatz für dessen Halsbereich mittels des gleichen Dorns von unten in die offene Blasform eingebracht wird.

13. Verfahren nach einem der Ansprüche 9 bis 12, **dadurch gekennzeichnet, dass** der in die offene Blasform extrudierte Schlauch im Bereich seines Eintritts in die Blasform mittels Unterdruck offen gehalten und oberhalb dessen durchtrennt wird, dass die Blasform aus ihrer Position (unter der Extrusionsdüse) in eine Blasstation verfahren wird und dass eine Metallkalotte mit der Innenkontur zumindest des Bodens des Rohlings in den dem Boden entsprechenden Bereich der Kavität mittels eines heb- und senkbaren Dorns von oben in die offene Blasform eingebracht wird.

14. Blasformstation zum Herstellen eines Druckbehälter-Rohlings, dessen Körper (1) über eine Schulter (3) in einen Hals (4) und eine Mündung (5) übergeht, die zum Einschrauben eines Ventils ausgebildet ist, mit einem längs geteilten Blasformwerkzeug, das wenigstens zwei zum Öffnen und Schliessen des Blasformwerkzeuges relativ zueinander verfahrbare Formteile (11a, 11b) umfasst, die zusammen eine Kavität (12) begrenzen, die das Negativ des Rohlings mit vertikaler Mittelachse und nach unten weisender Mündung ist, und mit einem heb- und senkbaren Blasdorn (13) zum Ausformen des Rohlings aus einem thermoplastischen, extrudierten Kunststoffschlauch (10), insbesondere zum Durchführen des Verfahrens nach einem der Ansprüche 9 bis 13, **dadurch gekennzeichnet, dass** der Blasdorn (13) unter dem Blasformwerkzeug angeordnet und als Halter für einen Metalleinsatz (6) ausgebildet ist, der die Innenkontur zumindest der Schulter (3) des Rohlings hat.

15. Blasformstation nach Anspruch 14, **dadurch gekennzeichnet, dass** der Blasdorn (13) zum Halten und Freigeben des Metalleinsatzes (6) radial bewegliche Klemmorgane oder andere lösbare Haltemittel hat.

16. Blasformstation nach Anspruch 14 oder 15, **dadurch gekennzeichnet, dass** der Blasdorn (14) eine bis zum Boden des Rohlings reichende Verlängerung hat, die als Halter für eine den Boden des Rohlings verstärkende Metallkalotte (7, 8) ausgebildet ist.

17. Blasformstation nach einem der Ansprüche 14 bis 16, **dadurch gekennzeichnet, dass** das Blasformwerkzeug auf der Eintrittsseite des Kunststoffschlauches (10) relativ zu den verfahrbaren Formteilen (20a) bewegliche, zusammenfahrbare Formoberteile (21a) mit einer Innenkontur zur Ausbildung des Halses oder des Bodens des Rohlings und oberhalb dieser Formoberteile Schieber (22a) mit Saugöffnungen (23) zum Offenhalten des abgetrennten oberen Endes des Kunststoffschlauches hat, und dass über dem Blasformwerkzeug ein heb- und senkbarer Dorn (24) angeordnet ist, der als Halter für einen Metalleinsatz (6) oder eine Metallkalotte (7, 8) zur innenseitigen Verstärkung der gefährdeten Bereiche des Rohlings ausgebildet ist.

18. Blasformstation nach Anspruch 17, **dadurch gekennzeichnet, dass** der Dorn (24) über dem Blasformwerkzeug als Blasdorn ausgebildet ist, und dass anstelle eines unter dem Blasformwerkzeug angeordneten Blasdorns ein Dorn als Halter für den Metalleinsatz angeordnet ist.
